(19) **Europäisches Patentamt**
**European Patent Office**
**Office européen des brevets**

(11) **EP 2 066 743 B1**

(12) **EUROPEAN PATENT SPECIFICATION**

(45) Date of publication and mention
of the grant of the patent:
**15.12.2021 Bulletin 2021/50**

(21) Application number: **07803701.7**

(22) Date of filing: **04.09.2007**

(51) Int Cl.:
*C01B 32/174* (2017.01)    *B82Y 30/00* (2011.01)
*B82Y 40/00* (2011.01)    *C08L 1/02* (2006.01)
*C08L 1/10* (2006.01)    *C08L 97/02* (2006.01)
*D01F 1/09* (2006.01)    *D01F 2/10* (2006.01)
*C08J 5/00* (2006.01)    *D21C 9/00* (2006.01)
*H01G 11/36* (2013.01)    *H01G 11/22* (2013.01)
*D21H 11/20* (2006.01)    *D21H 13/50* (2006.01)
*D21H 21/52* (2006.01)

(86) International application number:
**PCT/FI2007/000219**

(87) International publication number:
**WO 2008/034939 (27.03.2008 Gazette 2008/13)**

(54) **FUNCTIONALIZED CELLULOSE - CARBON NANOTUBE NANOCOMPOSITES**

FUNKTIONALISIERTE CELLULOSE-KOHLENSTOFFNANORÖHREN-NANOVERBUNDWERKSTOFFE

NANOCOMPOSITES COMPRENANT DES NANOTUBES DE CELLULOSE- CARBONE FONCTIONNALISÉS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **04.09.2006 FI 20060789**
**04.09.2006 FI 20060790**
**15.12.2006 FI 20061128**

(43) Date of publication of application:
**10.06.2009 Bulletin 2009/24**

(73) Proprietor: **OY MORPHONA LTD.**
**40640 JYVÄSKYLÄ (FI)**

(72) Inventors:
• **MOILANEN, Pasi**
**40520 Jyväskylä (FI)**

• **VIRTANEN, Jorma**
**09120 Karjalohja (FI)**

(74) Representative: **Kespat Oy**
**Vasarakatu 1**
**40320 Jyväskylä (FI)**

(56) References cited:
**EP-A2- 1 146 527**    **WO-A1-2006/040398**
**WO-A1-2006/072741**    **WO-A2-03/013199**
**WO-A2-2004/106420**    **WO-A2-2005/014475**
**US-A1- 2006 274 049**

• **LICEA-JIMENEZ H.L. ET AL.: 'MWNT reinforced melamine-formaldehyde containing alpha-cellulose' COMPOS. SCI. TECHNOL. vol. 67, no. 5, January 2007, pages 844 - 854, XP005835495**

**Description**

BACKGROUND

Field of Invention

This invention relates to a nanocomposite according to preamble of claim 1. Also described herein are polymers, supercapacitors and wood composites, as well as some applications of carbon nanotube composites and hybrid materials.

Prior art and overall description

Carbon nanotubes (CNTs) can be single walled, double walled or multiwalled. They can have diameters that range from subnanometer to over 100 nm. Also CNTs have a multitude of chiralities. Thus, there are hundreds of different kind of CNTs. Some CNTs are metallic conductors and some are semiconducting. Many CNTs are better electrical conductors than silver at room temperature. All CNTs are very strong, and the tensile strength of the CNTs is tens of times better than that of steel. However, these properties have been measured from single CNTs, and fabrication of macroscopic material that comes even close to the good properties of single CNTs has been a daunting problem.
Functionalization of both cellulose and CNTs increases their solubility. CNTs can be functionalized by several methods. One commonly used method is oxidation with the mixture of sulfuric and nitric acids to form carboxylic groups (R.E. Smalley, et al., Method for forming an array of single-wall carbon nanotubes and compositions thereof, US2002/0159943 A1). Many moieties can be attached with carboxylic groups. In another method radicals are generated from diazonium salts, and these radicals react with the CNTs (J.M. Tour, et al., Process for functionalizing carbon nanotubes under solventfree conditions, Int. Appl. WO 2004/007364). In a co-owned method (J.Virtanen et al. WO 2006/040398) CNTs are cut, and the nascent dangling bonds react with a reagent that is present. These are just some examples that are well known in-the-art. Functionalized CNTs are not really CNTs any more. They will be called hybrid nanotubes (HNTs) in this context. HNTs are the scope of this invention. The term cellulose-HNT material will be used to cover all nanocomposite and hybrid materials of the present invention. Also cellulose may be chemically modified.
The present invention solves some of these problems associated with the materials made of CNTs, because HNTs are chemically cross-linked with each other and cellulose, as described in claims 1-5.
Cross-linking can be covalent or supramolecular, i.e., ion, hydrogen, or $\pi$-bonded. Cross-linking provides stability and in some cases more functionality for the hybrid material.
Cellulose is a renewable material, and its annual production in the nature might be more than the production of any other natural or man-made polymer. In wood, cellulose is intertwined with lignin which is an aromatic polyether. Pure cellulose fibres are a few micrometers long, and they have a rectangular cross-section. The cellulose fibres are hollow. Cellulose fibres bind with each other by hydrogen bonds. Because of the large number of hydrogen bonds the interaction is very strong. However, water is able to break at least partially the hydrogen bonding network, and wet paper is very weak.
Electrically conducting paper is currently fabricated by mixing carbon black with cellulose. Fairly large amounts of carbon black is required for proper electrical conductivity. Moreover, carbon black reduces the mechanical properties of paper. On the contrary, relatively small concentration of HNTs in paper give good electrical conductivity, and mechanical properties are simultaneously improved.
Wood as such can be considered to be a nanocomposite of cellulose and lignin. Thus, a lot of the discussion regarding the interaction of cellulose and HNTs is applicable to wood. Wood is fairly porous, and it can absorb many kind of materials. Wood can be one raw material in the fabrication of composites. Pores can be saturated with various monomers that can be polymerized by heat, or by radioactive radiation to form a composite of plastic and wood. HNTs will promote the absorption of monomers and plastics into wood. Layers of wood can be glued together to form plywood. Similarly, when wood chips are glued together to form various kinds of compressed wood composites. Again the interaction of cellulose and HNTs will make the binding stronger, especially because the glue, monomers, or polymer will seep deeper into the structure wood.
Wood consists of cellulose, hemicellulose, lignin, and some minor components that are mostly terpenes. Cellulose is a polymer of $\beta$-glucose, and accordingly contains many hydroxyl groups. Individual cellulose fibres can be several micrometers long. Lignin is an aromatic polyether that contains some phenolic hydroxyl groups. Cellulose fibres are remnants of cells, and when the cell dries, the interior will be hollow. Wood is a very porous structure. When wood is cut, the surface will have a lot of capillary-like pores into which HNTs and other molecules can penetrate.
When nanoparticles or fibres are mixed, a nanocomposite is formed. The mixing must be efficient, so that the components are mixed also in nanoscale. Fabrication of nanocomposites is not trivial, because often each component tends to separate into clusters that do not contain or contain very little of the other component(s). When the nanocomponents are chemically bound, the material is classified as a hybrid material.

The main focus of this invention is the fabrication and applications of cellulose-HNT hybrid materials.

Cellulose is hydrophilic and HNTs are hydrophobic, although their π-electrons are able to form hydrogen bonds with hydrogen donors. One is inclined to suppose that the mixing of these materials is difficult or even impossible. Mixing of hydrophobic and hydrophilic material, such as oil and water, can be accomplished, when detergents are used to reduce the surface tension between these materials. However, this has been done in the cases, when at least one of the components is liquid. In the present case both materials, cellulose and HNTs are solid. The task seems to be exceptionally difficult, i.e., mixing of hydrophobic solid with hydrophilic solid at nanoscale. In the present invention HNTs are first reacted or suspended into an organic liquid that preferably is a monomer that penetrates inside cellulose fibres. In another published method (S. H. Yoon et al., Electrically conductive bacterial Cellulose by incorporation of carbon nanotubes, Biomacromolecules 7, 1280-1284, 2006) HNTs are suspended into a solution using a detergent and ultrasonic vibration. Into this solution is dipped a bacterial cellulose pellicle, essentially a thin cellulose sheet. HNTs are adsorbed and possibly absorbed by this sheet. Detergent is washed away.

The object of the invention is to create a new nanocomposite that contains cellulose from cellulose fibres from cellulose fibres and functionalized carbon nanotubes, said cellulose fibres being hollow and several micrometres long and consisting of bundles of cellulose molecules and having diameters between 15 - 150 nm, and said functionalized carbon nanotubes having diameters about 1 - 150 nm and length in a range of several micrometres to several centimetres. The said object is achieved, when cellulose and functionalized carbon nanotubes are interacting with each other, wherein individual cellulose molecules or their dimers, trimers etc. are at least partially detached from the cellulose fibres, and interacting with the molecules of functionalized carbon nanotubes.

Suprisingly, it turns out that cellulose and HNTs have a high affinity with each other, and when they are at least partially suspended into water they bind with each other. Mere mechanical grinding in the presence of a modest amount of water gives a product that has superior properties. Also several variations yield good quality products. For example, mixtures of water and alcohols can be used, and mixing can be performed by other methods. It is possible that if detergents are used, they might not be completely removed with the extraction with water. Detergents might form an insulating layer around HNTs, and electronic and mechanical properties will be hampered. If detergent is used, it should be extractable with water or solvents.

Both cellulose and CNTs have been mixed with plastics, composites, ceramics, and even metals, and these materials and methods for their fabrication are well known in-the-art.

Our results indicate that cellulose-HNT complex that is fabricated with the methods of this invention gives superior results as compared to either component alone (see Example 7).

The present invention allows the improvement of all wood based composites by application of HNT containing monomers and plastics. Most importantly, various epoxies and polyurethanes that contain HNTs can be utilized to fabricate wood composites.

The composites of the present invention have numerous applications. Currently the most important ones are supercapacitors, water and air purification filters, and materials, including HNT-cellulose paper, reinforced epoxy and urethane.

FIGURE CAPTIONS

Fig. 1. Schematic structure of A., cellulose, B., a small fragment of a carbon nanotube, and C., their possible interaction.

Fig. 2. A. A schematic depiction of a cut cellulose fibre that has two HNTs partially in the hollow interior. B. A magnified view of the cellulose fibre that contain HNTs and has HNTs on the outer surface either adsorbed or bound by one cellulose molecule.

Fig. 3. Actual TEM image of cellulose-HNT nanocomposite (amino functionalized multiwalled CNTs).

Fig. 4. A schematic depiction a reaction between wood or resin bound phenolic hydroxyl and epoxy group that is bound with HNT *via* bisphenol A.

Fig. 5. Schematic structure of A., cellulose cross-linked with boric acid, B., cellulose cross-linked with cyanuric chloride.

Fig. 6. A schematic reaction between bis-isothiocyanate and a polymeric material that contains hydroxyl groups, especially cellulose or hydroxylated HNT, forming a three component hybride material, more specifically nanostructured urethane.

Fig. 7. Schematic structure of wood laminate that is bound with HNT containing resin.

Fig. 8. Schematic depiction of one embodiment of a supercapacitor according to the present invention.

Fig. 9. Schematic depiction of the formation of electric double layer around charged HNTs. (Not to scale).

Fig. 10. Schematic depiction of the circuitry of the array of 24 supercapacitors that is able to maintain nearly constant 12 V potential. A. Twelve supercapacitors in series, and the rest (12) are decoupled. B. Fourteen supercapacitors are connected in series, and the rest (10) are decoupled.

Fig. 11. A. Topview of the supercapacitor-lead battery hybrid that shows various compartments. B. Three dimensional depiction of the supercapacitor-lead battery hybrid.

Fig. 12. Flow through supercapacitor that is able to bind ions from the flowing electrolyte.

Fig. 13. Schematic depiction of the nanoparticle-HNT composite that has increased surface area for the formation of an electric double layer. Nanoparticles are either metallic or semiconducting.

Fig. 14. A schematic depiction of the actual measured I-V curve of the cellulose-HNT nanocomposite of Example 4.

SUMMARY OF THE PRESENT INVENTION

The present invention provides a nanocomposite that contains cellulose from cellulose fibres and functionalized carbon nanotubes, wherein cellulose and functionalized carbon nanotubes are cross-linked chemically with each other, and wherein individual cellulose molecules or their dimers, trimers etc. are at least partially detached from the cellulose fibres, and interacting with the molecules of functionalized carbon nanotubes.
The nanocomposites can be fabricated efficiently, fast, and economically by mechanical or ultrasonic vibration assisted mixing in organic solvents or water.
It is a further aspect of the present invention to improve the mechanical properties by chemical cross-linking cellulose with HNTs and/or HNTs with each other. The cross-linked material is a hybrid material.
In one currently preferred embodiment of the present invention HNTs are added into the pulp cooking liquid, when cellulose is fabricated from wood or other plant materials.
In one advantageous embodiment cellulose is solubilized as xanthate using carbon disulfide, or copper(II) salts, or urea. HNTs are dispersed, and HNT-cellulose nanocomposite is deposited, for example, by injection into acid. Electrically conducting fibres can be fabricated by this method. The solution can be also injected into a bath that contains cross-linking agents.
In another aspect of the present invention the cellulose-HNT material is electrically conducting. Electrically conducting paper can be used as electrical conductors, heating elements, capacitors, and as a substrate for printable electronics.
In still another embodiment the cellulose-HNT material is used as an electron emitter in displays, X-ray sources, and whenever a free electron source is needed.
Methods for the efficient, and economical fabrication of supercapacitors, made of various cellulose-HNT nanocomposites or hybrid materials, in which cellulose may be chemically modified, are presented. Chemical modification may introduce ion exchange properties and/or increase polarity near HNTs. Polarity can be increased, for example, forming dimethylamido derivative of carboxymethyl cellulose.
It is a further aspect of the present invention to improve the mechanical properties by chemical cross-linking cellulose and/or HNTs. Cross-linking can be facilitated with functionalization of cellulose before or during their mixing.
Still in another embodiment of the present invention the surface area of the HNT electrodes will be increased by addition of metallic or semiconducting nanoparticles, such as carbon, cadmium sulfide or selenide, iron phosphate, gold, platinum, or particles that are coated with these conducting materials.
In another different aspect of the present disclosure the supercapacitor can be used as an electrostatic ion exchanger. In this embodiment the capacitor has an inlet and outlet for the electrolyte solution. One especially important application for electrostatic ion exchangers is desalination of sea water.
In a further embodiment cellulose-HNT materials can be used to reinforce and made electrically conducting plastics and resins, such as polyethylene, polystyrene, polycarbonate, epoxies, and polyurethane.
It is an additional aspect of the present invention that the cellulose-HNT materials can be used to reinforce other composite and hybrid materials. These have multitude of uses in sports equipment, vehicles, aerospace, boats and ships, buildings, bridges, and other applications, in which composites are used.

Described herein are wood-polymer hybrid nanotube composites, which are stronger, lighter, and/or more corrosion resistant than current materials. Wood can be any wood, such as pine, fir, oak, birch, maple, eucalyptus, or balsa, and similarly polymer can be almost any artificial polymer that contains hybrid nanotubes.

Also disclosed herein are devices for using reduced pressure to remove the air from the wood before applying a polymer-HNT composite. In another embodiment of this invention ultrasonic vibration is used to enhance penetration of the polymer-HNT composite into the wood.

In one embodiment of the current invention the HNTs are cross-linked by a reactant so that covalently bonded networks will be formed. These networks can have dendritic structures, which have utility in electrically and thermally conducting wood composite materials.

One purpose of the present invention is to provide stronger materials that are applicable in construction, aerospace, automobile, machine industry, and sports equipments. These materials have high tensile strength and/or good electrical and/or thermal conductivity. Aerospace, automobile, and machine applications include body, frame, rollers, and various panels.

DETAILED DESCRIPTION OF THE PRESENT INVENTION

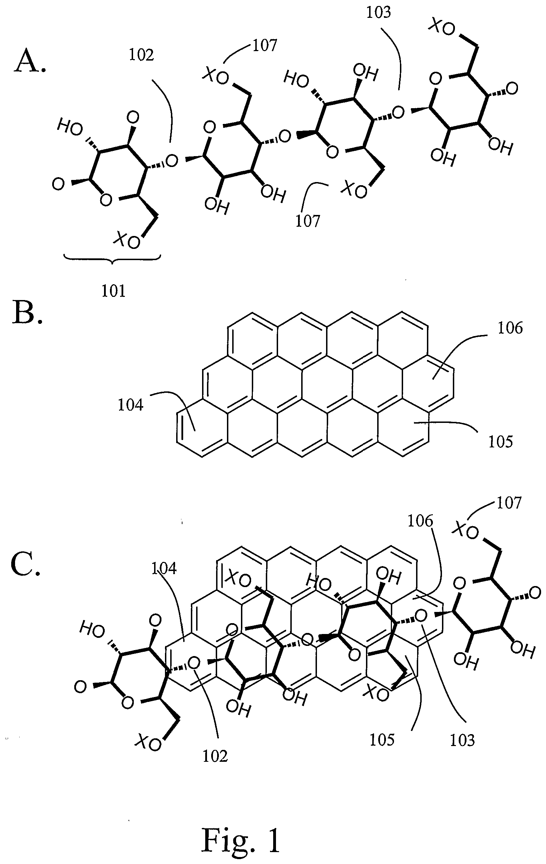

In wood cellulose interacts with lignin that is aromatic polyether. Although interaction could be explained to be due to hydrogen bonding between hydroxyl groups and ether oxygen atoms, it is feasible that aromatic moieties are also able to interact with cellulose. Cellulose is a polymer of β-glucose 101 (Fig. 1 A, X = H)), in which hydroxyl groups are oriented equatorially. β-Glucose moieties are rotated alternatively 180° relative to each other. Thus, every other β-glucose is oriented in the same way, and the actual period if cellulose contains two β-glucose moieties. The translationally identical oxygen atoms are denoted 102 and 103 (Fig. 1 A and C). These oxygen atoms are placed in the center of benzene rings in Fig. 1 C. This is only one possible site for these oxygen atoms. The ring itself contains five hydrophobic carbon atoms and one oxygen. Thus, the β-glucose may bind with NT. Also π-electrons of the NTs are able to bind protons and form hydrogen bonds. Supposedly these hydrogen bonds are fairly weak, but their large number can still give a strong overall bonding between cellulose and NT. The benzene ring 104 at the bottom left in Fig. 1B may be chosen to be an origin, and denoted (0,0). The next one on the right side is then denoted (1,0), and the benzene ring 105 is denoted (4,0). Going 60 ° up from origin would lead to a benzene ring (0,1), and similarly going 120 ° up from benzene ring 105 will lead to (4,1) that has a number 106 in Fig. 1 B and C. It turns out that two oxygen atoms 102 and 103 of cellulose are aligned with the benzene rings 104 and 106, respectively. Although the present invention is not bound by this hypothesis, this alignment might explain the strong interaction between cellulose and HNTs, and similarly between their derivatives.

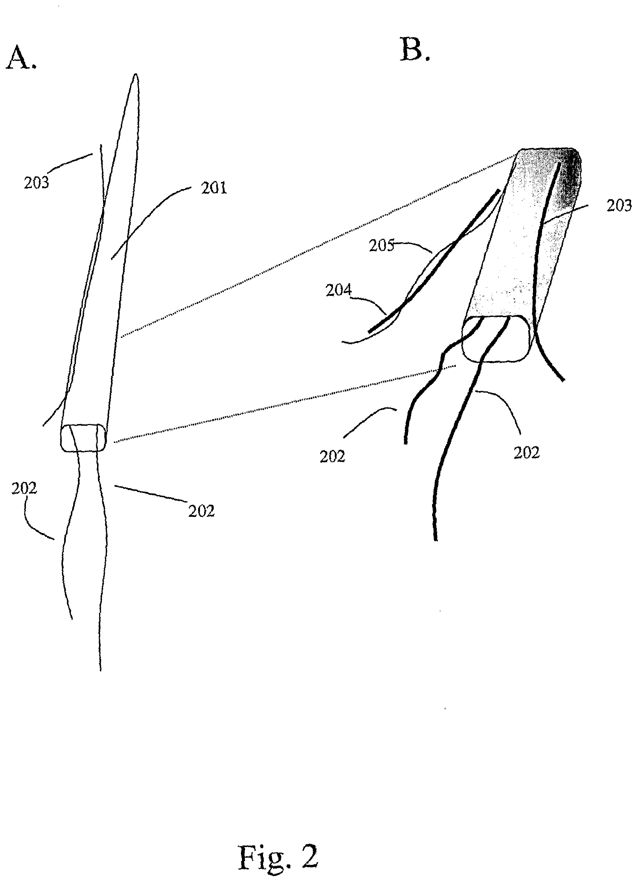

Cellulose fibres are microfibres. It is possible to fabricate cellulose nanofibres that have diameters between 15 - 150 nm. They are still several micrometers long, and are called microfibrillated cellulose (M. Ankerfors, et al., A manufacturing method for microfibrillated cellulose, 6th International Paper and Coating Chemistry Symposium, 2006). Cellulose fibres that consist of bundles of cellulose molecules, are hollow. In Fig. 2 is a schematic picture of a cut cellulose fibre 201. HNTs 202 and 203 may go inside of the cellulose fibres or adsorb on their surface. The large amount of the HNTs that interacts with cellulose indicates that the individual cellulose molecules 205, or their dimers, trimers, etc. are at least partially detached from the cellulose fibres, and interact with the HNTs 204. HNTs have diameters between about 1 nm and 150 nm, and their length can be several centimeters, but is typically several micrometers. Both are sparingly soluble into all solvents. Due to large particle size they form suspensions rather than solutions, although terms solubility, solution and solubilization will be used here frequently. HNTs can be solubilized into water using detergents, and into organic solvents as such or using compounds, such as pyrene, that increase the solubility of the HNTs. Detergents may hamper the good properties of cellulose-HNT materials. Ultrasonic vibration is customarily used for the solubilization of the HNTs.

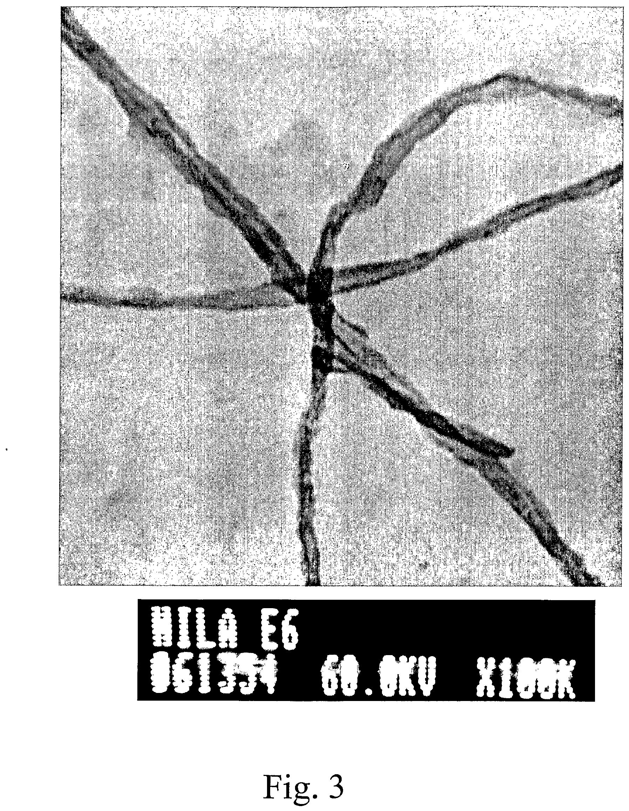

In Fig. 3 is shown an actual cellulose-HNT nanocomposite. While neat HNTs have sharp fairly straight or slowly bending walls, cellulose makes the walls uneven, and appears in some cases to intertwine helically with HNTs.

Cellulose xanthate is used industrially for the fabrication of cellulose fibres. Cellulose acetate, phtalate, acrylate, and nitrate are also much better soluble into organic solvents than cellulose. Sulfonation, carboxylation, amination, and many other functionalizations increase the solubility of the HNTs into water several orders of magnitude. Often the primary hydroxyl group is easiest to functionalize (X in Fig. 1), although other hydroxyl groups can also be functionalized.

Cellulose and HNTs can be mixed by virtually every mixing method that is known in-the-art to mix micro- or nanoparticles. Currently, mechanical mixing in a mortar or ball mill, and ultrasonic mixing are preferred. Also their combination is sometimes advantageous.

Mechanical mixing is often the first step. For example, wetted components can be ground in a mortar. They can be wetted with small amount of water or organic solvent, such as methanol, ethanol, or 2-propanol before grinding.

This is very inexpensive process and can be scaled up to an industrial scale with commercially available equipment.

Still another mixing method is provided by shear force that can be especially strong in a high pressure dispersion apparatus, which is commercially available, for example DeBEE 2000 Pilot Homogenizer. The pressure gradients in these devices can be hundreds of bars.

Mechanical mixing is ineffective at very short distances because the molecules move together about the same speed. The ultrasonic vibration agitates molecules and particles by accelerating them back and forth in a rapid succession. Thus, the diffusion gradients of the reagents are diminished. This greatly increases the rate of the diffusion dependent collision and binding of particles.

Ultrasonic vibrators are made of piezoelectric materials. The most commonly used material is lead zirconium titanate. The piezoelectric material is sandwiched between two electrodes. The frequency, and amplitude of the ultrasonic vibration can be adjusted the electric potential and frequency of the AC field between the electrodes. The amplitude of the vibration is limited also by the thickness of the piezoelectric layer. The frequencies vary typically between 10 kHz and 1 Mhz, although frequencies outside these ranges can be used. Currently, the frequencies between 20 and 30 kHz are preferred. The vibration amplitude is preferably between 5 and 200 $\mu$m, most advantageously between 20 and 120 $\mu$m.

The power of one sonotrode can be between 0.1 and 50 kW, most advantageously between 1 and 20 kW. When multiple sonotrodes are used, the power may vary with time so that interference pattern will change all the time. Thus, the whole reaction mixture can be more evenly agitated. Ultrasonic processes can be easily scaled up and optimized (Hielscher T., Ultrasonic production of nano-size dispersions and emulsions, ENS'05, Paris, France, 14-16 December 2005).

Pulp cooking

In wood cellulose fibres are surrounded by lignin. They form large aggregates, when the lignin has been degraded and dissolved away. If HNTs are present in the cooking liquid, they will form a complex with the cellulose fibres *in situ.* Thus, a nanocomposite is formed immediately. The cooking liquid may be mechanically mixed and/or ultrasonically vibrated. These methods are described in a co-owned patent application WO 2006/040398. In order to facilitate the integration of HNTs and wood, organic solvent such as 2-propanol or butanol, may be added. Also small amount of detergent like sodium dodecyl sulfate may be sometimes used.

The reactor walls or some plate inside the reactor may vibrate. Currently, a vibrating sonotrode inside the reaction mixture is preferred. The sonotrode may be made of stainless steel, titanium or some other metal. In order to obtain chemical resistance the sonotrode may be coated with chemically more resistant material, for example with platinum. The reactor may contain a mechanical mixer. The mixer may have blades, propel, or screw. The motor is advantageously outside the reactor and on the top, and the shaft comes into the reactor. Tubular flow-through reactor is currently preferred, because even distribution of the vibrational energy into the reaction mixture can be obtained.

Thus, no heating is mandatory in the reactor. The reactor should only be thermally isolated so that the temperature does not change much, while the reaction mixture transverses through the reactor. The ultrasonic vibrator generates heat, and the temperature can actually increase slightly in the reactor. External or internal heating is also possible in the reactor. The heating can be accomplished by the methods that are well known in the art. Also electromagnetic radiation can be used, especially IR-, or microwave radiation. The wavelength is preferably chosen so that cellulose, HNTs, or both absorb it effectively. This radiation may be advantageously be directed into the reaction chamber.

Cross-linking of the components

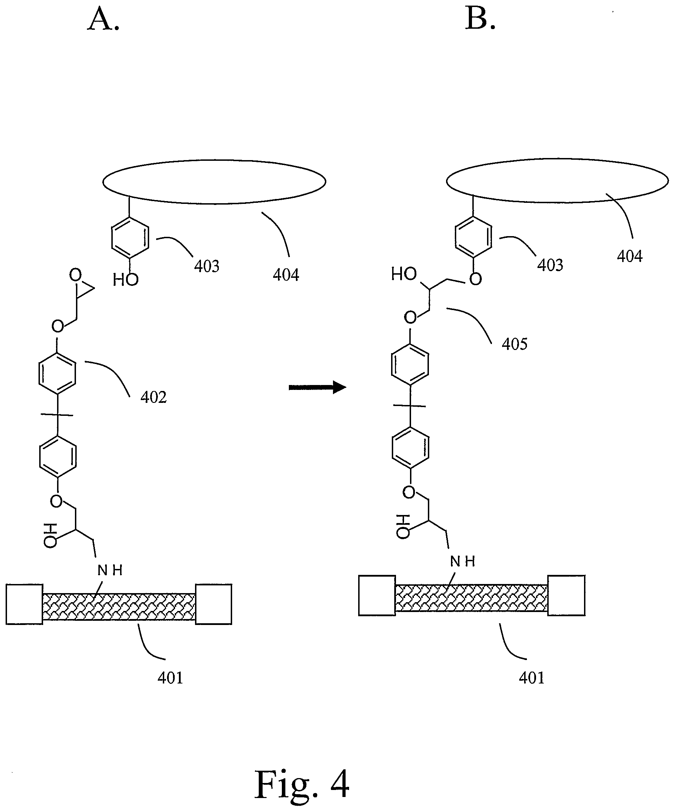

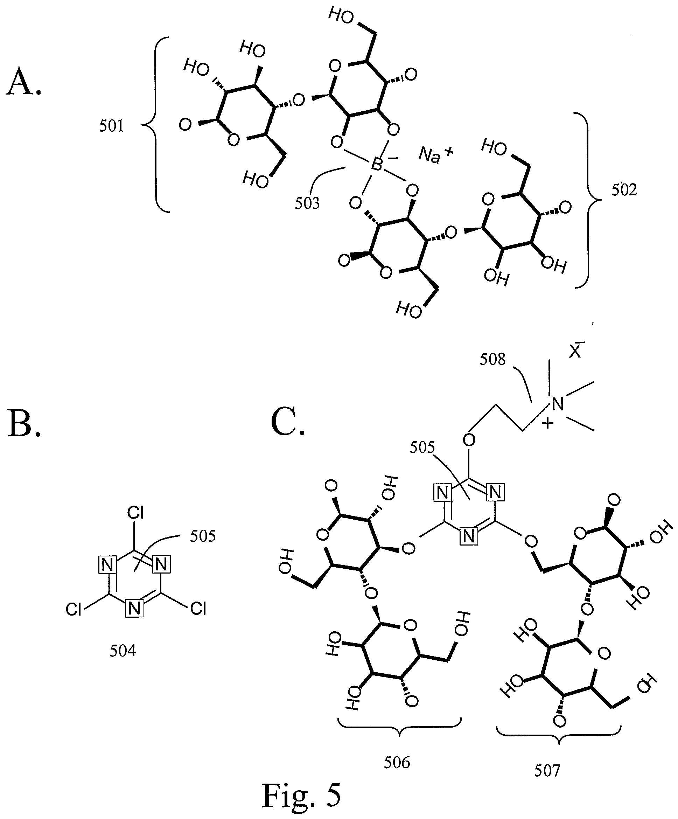

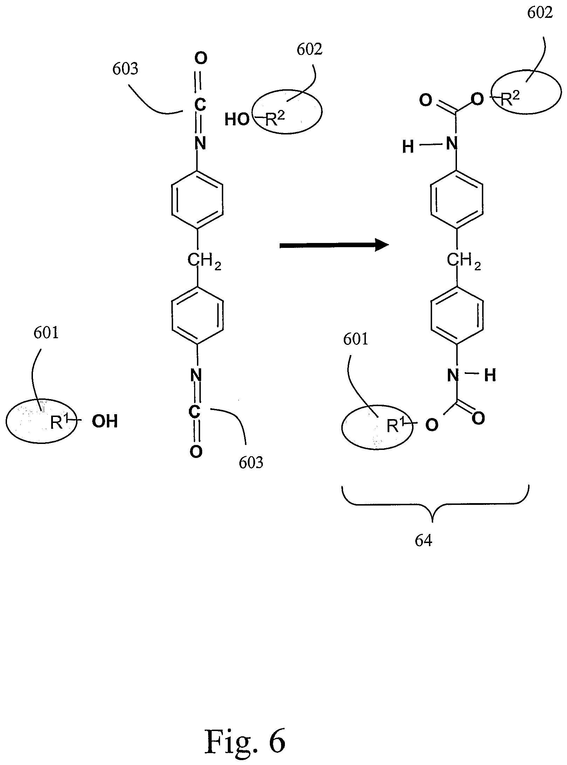

Cellulose is a polyalcohol. It can be reacted with carboxylic acids to form ester bonds, and with alkyl halides and epoxies to form ether bonds (Fig. 4). Further possibilies are reactions with isocyanates and isothiocyanates to form amides and thioamides. Boric acid is a reversible coupling reagent for diols, such as cellulose (Fig. 5 A). Cyanuric chloride 504 is a trivalent coupling agent that reacts easily with hydroxyl groups in the cellulose molecules 506, 507, and still another alcohol that in this specific example is choline 508 (Fig. 5 B). Bis-isocyanates are divalent coupling reagents for alcohols, and are widely used for the fabrication of polyurethanes (Fig. 6). These are some commonly used reactions for the cross-linking of alcohols. If NTs are functionalized, they can be cross-linked with each other and also with cellulose. In Fig 6, 601 can be cellulose, and 602 can be hydroxyl functionalized HNT. Amino functionalized NTs can be selectively cross-linked with each other with active esters, such as N-hydroxy succinimide carboxylates, while thiol functionalized NTs can be cross-linked with maleimide coupling reagents. These and other cross-linking reactions are well known in-the-art (See for example, Pierce, 2003-2004 Applications Handbook and Catalog, Pierce Biotechnology Inc.).

If ultrasonic vibration is used during the fabrication of the cellulose-HNT material, cellulose will be coupled with HNTs as is described for alcohols in co-owned patent application (J. Virtanen et al., WO 2006/040398). Because of good dispersion of the HNTs in the presence of cellulose and its derivatives, ultrasonic activation of reactions or mechanochemistry is facilitated. However, the presence of water and/or alcohols diminishes considerably the direct coupling of cellulose and HNTs.

Cellulose may be derivatized so that it will bind chemically with a composite matrix, in which it is embedded in a specific application. For example, if cellulose-HNT material is used for the enforcement of epoxy composite, cellulose may be reacted with epichlorohydrin.

Further processing

Cellulose and HNTs are very strong materials on a nanoscale level. Cellulose molecules are hydrogen bonded with each other and form fibres that are further hydrogen bonded and can form macroscopic structures, such as paper. HNTs interact with Van der Waals forces, which can be significant, because there are so many interaction atom pairs in two vicinal HNTs. However, the gliding barrier is quite low between two HNTs. Interaction of HNTs depends on the functional groups that they contain, and range from Van der Waals, and hydrogen bonds to covalent bonds.

One explanation for the good electronic and mechanical properties of cellulose-HNT materials is that cellulose that is associated with HNTs form a hydrogen bonded network. Also the HNTs will be connected well enough for electric and mechanical purposes. The hydrogen bonding is weaker when hydrogen bonding solvents are used or the material is heated. Cellulose-HNT complexes can be oriented using electromagnetic field, and when the solvent is removed, or the material is cooled, the hydrogen bonds will lock the orientation of the cellulose-HNT complexes (Example 7, in which only electric field was applied).

Paper and paper-like products can be fabricated with the same methods that conventional paper is fabricated. All kinds of surfaces and shapes can be coated with wet material. After drying the surface is partially or totally covered with cellulose-HNT material.

The materials of the present invention can be mixed with other composite or hybrid materials. These include thermoplastics, resins, ceramic, and even metals.

Cellulose-HNT materials can be mixed with melted thermoplastics or with monomers that will be polymerized after the mixing. HNTs can be functionalized so that they will bind chemically with the matrix. For instance, cellulose acrylate may be mixed with the acrylate monomer. HNTs may be added into this mixture, and the mixture is polymerized. In this case there is no need for prefabrication of cellulose-HNT nanocomposite. Also HNTs may be functionalized with acrylates in this specific example. Similarly, cellulose-HNT can be incorporated in polycarbonate, silicone, nylon, Kevlar, polystyrene, polyethylene, polypropylene, and polyvinylchloride.

In one currently preferred method a concentrated mixture of the HNTs and cellulose acetate propionate (CAP) is fabricated first, and this mixture is then mixed with a thermoplastic. The advantage of this process is that CAP can be melted without decomposition, and no solvent is required in the fabrication process. Once HNTs are dispersed into the CAP, they can be easily mixed with the thermoplastic. The HNT-CAP and thermoplastic can be mixed as powders and heated so that both of them will be melted. The good mechanical mixing is sufficient for the dispersion of HNT-CAP into the thermoplastic, although optionally ultrasonic vibration may be used.

CAP may be partially hydrolyzed with a base, so that some or all of the hydroxyl groups of cellulose are released. The purpose of this hydrolysis is to make the composite more polar or hydrophilic, and also more porous. This can be important in some applications, such as capacitors, in which ions must be able to move.

If covalent coupling with the matrix is not essential, the mixing of the cellulose-HNT with a polymer melt is preferred over copolymerization. In several cases mixing is easier, if proper cellulose derivative is used. Often cellulose acetate is preferred. For polystyrene, cellulose benzoate is adequate, while for polypropylene cellulose butyrate is a better fit.

Thermoset plastics and resins are typically fabricated from two components, which are mixed shortly before the use. Cellulose and HNTs can be mixed with one of these components or both. For example, cellulose glycidyl ether-HNT nanocomposite may be mixed with bisphenol A bisglycidyl ether. When this epoxy is mixed with a hardener before use, cellulose-HNT nanocomposite is chemically coupled with the epoxy matrix via cellulose. If HNTs are functionalized with epoxy groups 402, the coupling would be also via HNTs 401 (Fig. 4). Similarly, cellulose-HNTs may be mixed with urethanes. The hydroxyl groups of cellulose react with isocyanate groups 603, and cellulose serves as a hardener (Fig. 6). Other resins include phenol-formaldehyde, Fig. 4, in which 404 can represent phenol-formaldehyde resin.

Many ceramics can be fabricated by mixing the components first in water. Also water-alcohol mixtures can be used. These are suitable for the mixing of cellulose and HNTs. Thus, all components can be mixed simultaneously. For example, compounds like calcium hydroxide, aluminum hydroxide, copper chloride, and iron chloride can be mixed with cellulose-HNT slurry, and sodium hydroxide can be added, when applicable. The mixture is heated at about 100 °C, dried, and calcinated at relatively low temperature of about 250 °C under nitrogen. If silicic acid is added, glass-like product will be obtained.

Sol-gel method is amenable for the fabrication of cellulose-HNT nanocomposites in or aerogel form. This method is closely related to the fabrication of ceramics. In the sol-gel method the solvent is preferably alcohol, and additional gel forming component, such as tetraethyl silicate, is part of the mixture. When a small amount of water is added, tetraethyl silicate is hydrolyzed, and silica gel is formed. The silicon atom may be connected with one or two alkyl or aryl groups like methyl, or phenyl groups, which may also have functional groups, such as hydroxyl, amino, or carboxylic groups. Metal alcoholates are hydrolyzed by water into metal hydroxides, which often transform into corresponding oxides either spontaneously, or after heating. In order to neutralize the hydroxide ions, the water may contain acid, such as hydrochloric, hydrobromic, nitric, perchloric, sulfuric, formic, trifluoroacetic acid, or an easily hydrolysable ester like methyl formate. If the water phase contains anions, such as a halide, sulfide, selenide, telluride, carbonate, sulfate, phosphate, arsenide, and oxalate a corresponding salt is formed . The solution may contain several different alcoholates, and tetramethoxy or tetraethoxy silicate. Either composite nanoparticle, or metal silicate nanoparticles are formed in this case. Typical metal alcoholates or related compounds include barium(II)isopropoxide, zinc(II)methoxy ethoxide, aluminum(III)isopropoxide, iron(III)isopropoxide, nickel(II)methoxy-ethoxide, holmium(III)iso-propoxide, yttrium(III)iso-propoxide, europium(III)-D-3-trifluoro-acetylcamphorate, tin(IV)iso-propoxide, titanium(IV)isopropoxide, titanium(IV)isobutoxide, tungsten(V)ethoxide, tungsten(VI)isopropoxide, bismuth(III)methoxy-2-methyl-2-propoxide, hafnium(IV)tert-butoxide , hafnium tri-isopropoxy tetramethyheptane-dionate, zirconium(IV)tert-butoxide, niobium(V)isopropoxide,vanadium(V)tri-isopropoxide oxide, aluminium cobalt isopropoxide, lead(II)titanium(IV)isopropoxide, lead zirconium ethylhexano-isopropoxide, and $SrTa_2(OEt)_{10}(dmae)_2$. Almost any ceramic nanocomposite can be prepared using alcoholates. Examples are lead zirconium titanate, and strontium bismuth thallium oxide containing nanocomposites, which are piezo electric materials, and yttrium barium copper oxide that is a high temperature superconducting material.

Silylamides are another class of soluble metal compounds that are hydrolyzed by water. These include tris[N,N-bis(trimethylsilyl)amide]-cerium(III), and analogous compounds of erbium(III), europium(III), gadolinium(III), holmium(III), lanthanum(III), lutenium(III), neodium(III), praseodymium(III), samarium(III), scandium(III), terbium(III), thulium(III), ytterbium(III), and yttrium(III). These metal cations are lanthanides, and form fluorescent nanocomposites. Some other metals can be coprecipitated in order to change absorption or emission properties, or simply to reduce the cost.

Cellulose-HNT aerogels are made from the compounds mentioned above by replacing alcohol with supercritical carbon dioxide, and slowly evaporating carbon dioxide.

Gel made from cellulose is also known to prior art (Shigenori Kuga, The porous structure of cellulose gel regenerated from calcium thiocyanate solution, Journal of Colloid and Interface Science Volume 77, Issue 2, October 1980, Pages 413-417). In this method cellulose is first dissolved into 59wt% calcium thiocyanate aqueous solution, cellulose concentration being 1.0 wt%. This methdod was later modified (H. Jin et. al. Nanofibrillar cellulose aerogels, Colloids and Surfaces A: Physicochemical and Engineering Aspects Volume 240, Issues 1-3, 15 June 2004, Pages 63-67) so that aerogels can be produced from cellulose. When this method is even further modifed so that after cellulose is dissolved HNT's are added one can produce cellulose-HNT-aerogel.

Thermal instability of cellulose prevents the incorporation of cellulose-HNT into any metal that has melting point above 260 °C. However, there are other methods that are applicable. These include compression of nano- or micropowders, electrochemical deposition of metals, and flash cooling of evaporated metals so that amorphous metals are formed around cellulose-HNT at a low temperature.

Wood composites

Wood is a nanocomposite of cellulose and lignin. Wood can be further mixed with other materials to fabricate composites. Disclosed herein are composites of wood and polymers that contain hybrid nanotubes. Polymers can be formed *in situ* from monomers or they can be prepolymerized. HNTs are mixed at least with one component that is in the liquid state, when it is brought into contact with wood. Monomers can be acrylates, such as dimethyl acrylamide, ethylene glycol diacrylate or methyl methacrylate, styrene, vinyl chloride, isoprene, or butadiene. Currently preferred polymers are thermoset plastics or resins, which are formed from two or more different components, such as bisphenol A bisglycidyl ether, and diamino propylene glycol, or hexane-1,6-diisocyanate and ethylene glycol. Plastics include polypropylene, polyvinyl chloride, polycarbonates, polyacrylates, polyacetals, and polyvinyl alcohol. Incorporation of HNTs into monomers and plastics is described in a co-owned patent application (J.Virtanen et al. WO 2006/040398).

Wood has a porous structure, in which the pores are mostly capillaries. Most of the capillaries are few micrometers long, but some are much longer. The diameter of these capillaries ranges from submicrometer to a fraction of millimeter. Thus, HNTs can easily fit inside these capillaries (see Fig. 2). If the piece of wood is small, the HNTs can span from one side to another. In Fig. 2 is depicted, how HNTs 202 can be inside a cut cellulose fibre 201 so that part of the HNTs are inside the capillary, and the other part is dangling outside. The cellulose fibres are tightly packed side by side, often as a square lattice.

Cellulose fibres in wood contain both cellulose and lignin. The HNTs can be chemically bound to the sidewalls. Cellulose and lignin contain hydroxyl groups. Accordingly, the HNTs should have functionalities that react with alcohols or phenols. Those functionalities include isocyanate (Fig. 6), isothiocyanate, carboxylic anhydride, active ester and epoxy groups.

Cut cellulose fibres are common on the surface of wood that is mechanically processed, for instance, sawdust, wood chips, or sheets in plywood. The monomers and plastics penetrate spontaneously into the pores in the surface. The wetting is improved by the presence of the HNTs. Also polar monomers and plastics are preferred over nonpolar ones. The wetting can be improved and accelerated by applying vacuum so that air is evacuated from the capillaries before adding the polymeric or polymerizable material. Also heating helps wetting. Heating is also useful or necessary to keep polymers in liquid state or to polymerize thermoset polymers. Ultrasonic vibration provides still another method to speed and improve wetting.

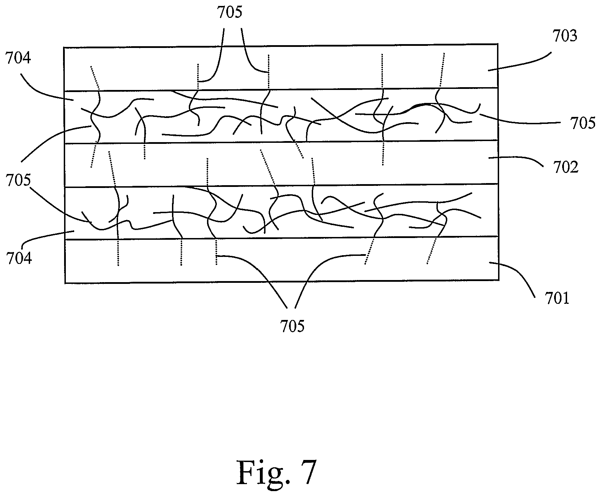

Fig. 7 depicts a wood-polymer-HNT composite. Three pieces of wood 701, 702, and 703 are shown. HNTs 705 are partly inside capillaries that may be hollow cellulose fibres or longer and wider capillaries that are abundant in wood. The capillaries are at least partially filled with polymer. The intermediate spaces 704 are filled with polymer that contains HNTs. HNTs are chemically bound with wood, polymer, and also with each other.

Fig. 4 depicts one specific binding chemistry, in which epoxy group 402 reacts with phenolic hydroxyl group 403. Lignin 404 has phenolic hydroxyl groups. Lignin is an aromatic polyether. If necessary, some of these ether bonds can be broken by strong nucleophiles, such as hydroxyl and sulfide ions. If the surface is treated with alkali hydroxide or sulfide solution and heated to about 80 - 150 °C, some alkali phenolate functionalities will be formed. These will react fast with epoxy groups.

The wood composites are stronger than corresponding traditional materials. If the content of the HNTs is more than the percolation limit of the HNTs, the composite will be electrically conducting. The percolation limit depends on the length of the HNTs, and also of the chemical coating. Typically the percolation limit is about 1 % of HNTs in the polymer. However, cellulose lowers the percolation limit. The reason for this is not currently known, but cellulose may make the HNT network tighter *via* hydrogen bonding. If more HNTs are added the electrical conductivity increases. Also thermal conductivity is improved considerably.

Applications

Applications can be divided roughly in two categories, mechanical materials and electronic materials applications.

Materials Applications

Cellulose is stronger than most other materials, and HNT is stronger than any other polymer molecule. Accordingly, the nanocomposite material of this invention will strengthen almost any matrix into which it is mixed. Especially, the tensile strength, strength at break, and crack resistance will be improved significantly. These properties will allow the use of the cellulose-HNT materials almost everywhere. Only some of the most important examples can be mentioned.

Sports equipment requires often the best possible materials, because they must be light, tough, and durable. Some examples of the sports equipments that benefit from cellulose-HNT materials are ice hockey sticks, and pads, tennis rackets, golf clubs, baseball bats, cross-country and downhill skis, ski boards and sticks and poles, bikes, surfboards, boats, and fishing rods.

Various panels and prepregs can be fabricated using cellulose-HNT materials . In the simplest form a reactive liquid two component mixture is between two plastic sheets. The prepreg is bent into a desired shape, for instance, with a mold, and heated. The reactive mixture will form cellulose-HNT material that is solid, and will retain the shape. Almost any structures can be made with this method. The reactive layer between two plastic sheets may contain glass or graphite fibres.

Many machine parts may be made directly from cellulose-HNT materials or from prepregs that contain cellulose-HNT materials, especially in demanding applications. These include rollers, and supporting structures.

Transportation vehicles, cars, motorbikes, snowmobiles, airplanes, and helicopters benefit greatly from lighter, and sturdier materials. Almost any part, with the exception of the combustion engines, and turbines can be made of the materials of this invention.

Buildings, trains, and ships may have cellulose-HNT material panels as supporting structures, floors, walls, and ceilings. Whole bridges, or some parts for bridges may be made of cellulose-HNT material.

Structures that provide electromagnetic shielding can be made from cellulose-HNT materials. For example, wireless link station casings could be made from cellulose-HNT material. The electromagnetic noise radiation will penetrate poorly through most cellulose-HNT materials.

Similarly, the nanomaterials of this invention will protect against radioactive radiation, especially neutron radiation. These kind of shields that in addition to graphitic materials contain lead, lead chloride, lead oxide, or lead sulphide nanoparticles may be highly useful in nuclear power plants.

Various pipes, such as water and sewage pipes, containers, and water, gas, and chemical tanks may be made using cellulose-HNT material.

Cellulose-HNT materials may be used as coating materials. Especially, when durability, corrosion resistance, antistatic properties, electrical or thermal conductivity are important.

Electrical applications are another main area for these new materials. The HNT concentration in various materials can be very high, when cellulose-HNT material is added. As a matter of fact the NT concentration can be higher than by adding pure HNTs. The electrical conductivity of the cellulose-HNT materials and their composites with other materials can be very high, for example, with 7:3 cellulose-HNT composition the resistivity was measured to be 0.01 $\Omega$m (Example 4).

The good conductivity allows the fabrication of electric wires from the materials of this invention. The wires can range from power lines to nanoelectronics. In these applications cellulose-HNT materials will mainly replace copper wires, but also wires made of other metals. The wires may have a traditional circular cross-section, but they may have other kind of cross-sections, especially rectangular cross-section can be easily fabricated from cellulose-HNT material. Compression that is described in the Example 4 is easier, if the cross-section is rectangular.

The orientation of fibres inside the wire are important. If fibres are oriented parallel to the wire, the conductivity is better along the long axis of the wire. This is often a desirable property. Orientation can be achieved by injection of the cellulose-HNT slurry though a nozzle, and drying the wire with hot dry gas. Magnetic and electric fields may be used to assist the orientation of cellulose-HNT nanocomposite or hybride material. Advantageously, other components that allow the formation of wire are used. There are multitude of thermoplastics and thermoset resins that form fibres. All these can be made electrically conducting by using the materials of this invention.

The wires may be coated with insulating layer, as is currently made for copper wires. The same materials that are suitable for copper can be used for these new materials.

Other macroscopic electrical applications include various heating elements. These can be used in buildings. They may replace radiators, but whole walls, floors, and ceilings may contain conducting layer that has prepared from the materials of this invention. If essentially the whole room is covered with heating elements, the temperature of these elements can be just slightly above the desired temperature. The voltage can be low, in the range of 6 - 24 V, so that there is no danger for a harmful electric shock. If the voltage is 20 V, and the resistance is 0.5 $\Omega$, the current is 40 A, and the power is 800 W, which is more than enough to keep a room warm even at a cold weather.

Applications of wood composites

The materials of this invention can be used in all applications, in which traditional wood composites are used. These include buildings, furniture, and sports equipment. Because the materials are stronger, less is needed to replace traditional materials. Electrical conductivity allows the fabrication of electrical heating elements that are at the same time structural part of the building. The resistance should be high. High resistance will be beneficial for the heat generation. Also a danger of electrical shock is diminished, if the resistance is high. Heat could be distributed evenly from the floor and/or walls and/or ceiling. Because large areas could be kept warm, none of them needs to be hot. If virtually all inner surfaces in the building are heated, they can be all kept at preset room temperature or only at slightly higher temperature. None of the surfaces would be warmer than the room itself, if the control is perfect.

Electrically conducting building elements can be attached onto the supporting structure with glue, or nails, provide that the nails are not contact with ground. The surface should be non-conducting. If the material is plywood, this requirement is fulfilled. With many other materials the surface must be coated with an insulating layer.

Although the materials of this invention can be used everywhere, they are especially advantageous in the areas that are prone to earthquakes.

Supercapacitors

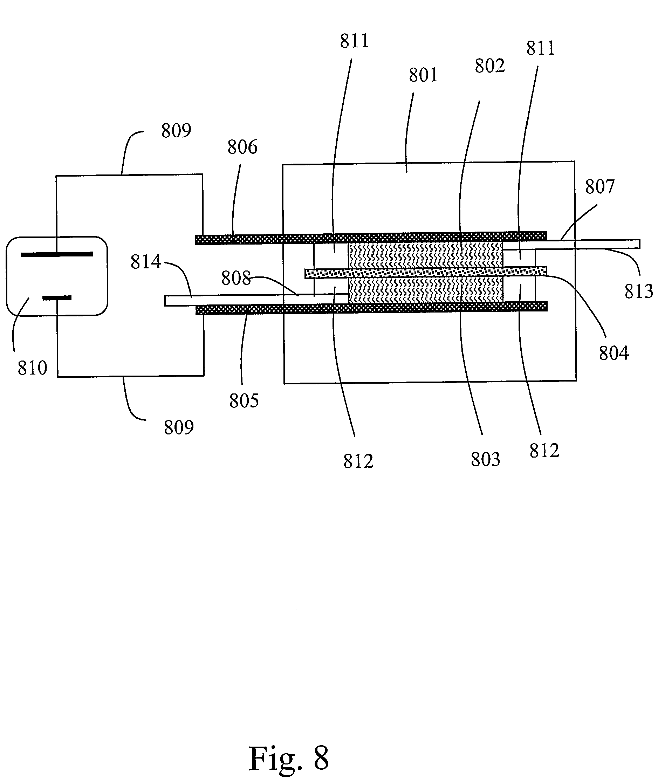

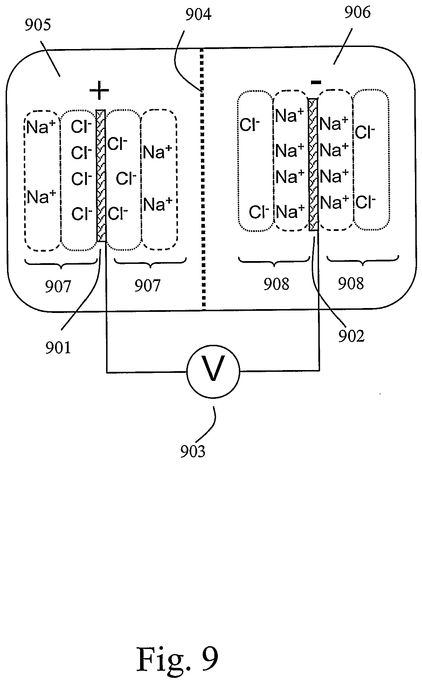

In Fig. 8 is a schematic structure of a supercapacitor. Like most conventional capacitors it has two parallel conducting plates 805 and 806. Between these plates is a porous membrane 804 that is made of dielectric material. This membrane divides the space between the plates 805 and 806 into two compartments 802 and 803, which are filled with a mixture of electronically and ionically conducting materials. The electronic conductor is in this invention cellulose-HNT nanocomposite material. The ionic conductor is an electrolyte in a suitable solvent or ionic liquid. When an external power source is connected with the plates 805 and 806, the potential will induce a surface charge on the HNTs, which are electrically connected with the plates. The surface charge will create a double layers 907 and 908 (Fig. 9) around each HNT in the presence of an electrolyte. The electric energy is now stored in double layers. See Example 11 for experimental details.

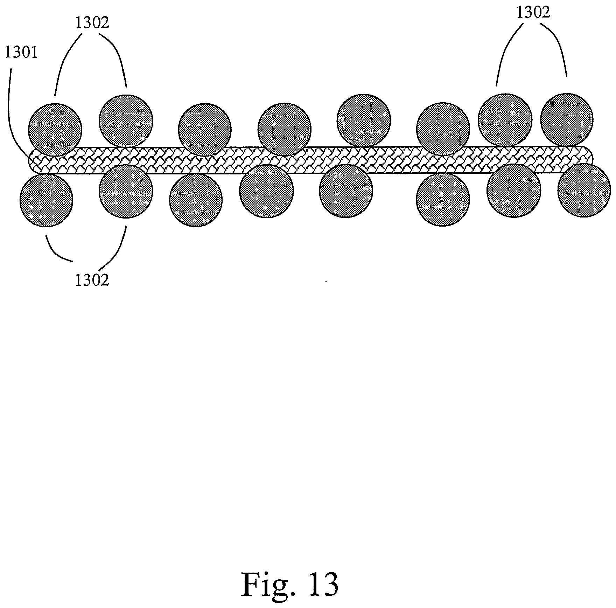

The electrically conducting surface area is linearily correlated with the capacitance. One way to further increase the active surface area is to adsorb or couple conducting particles 1302 with the HNTs 1301 (Fig. 13). A spherical particle has a fourfold area compared to the area that it covers. Moreover, most of the covered area is still active. In the ideal case the active area can be increased fivefold. This increase is independent of the radius of the particles. Thus, it is advantageous to use as small nanoparticles as possible, because overall mass and volume will increase minimally.

The conductivity of the nanoparticles is not of prime concern. Because cellulose-HNT network conducts electricity well, the nanoparticles that are in contact with HNTs will be charged even, if they are poor electrical conductors. Nanoparticles should be resistant to corrosion under electrical potential. Preferred materials are gold, platinum, carbon, zinc selenide, cadmium sulfide, cadmium selenide, gallium nitride, indium phosphide, iron phosphate, and polythiophene. Dielectric nanoparticles may be covered with any conducting material.

Very recently (Victor L. Pushparaj et. al. Flexible energy storage devices based on nanocomposite paper, PNAS August 21, 2007 vol. 104 no. 34 13577 ENGINEERING ) a different approach to fabrication of cellulose-carbon nanotube composite was presented. Although a similar end result, namely nanocomposite paper, as presented in this text is achieved the method published differs from the methods presented here.

Theoretical considerations

The capacitance is

$$C = \frac{\Theta}{\varsigma} = \frac{A\varepsilon}{\delta}.$$

(1)

where $Q$ is the charge, $V$ is the potential, $\varepsilon = \varepsilon_0 \varepsilon_r$, in which $\varepsilon_0$ is the permittivity of empty space and $\varepsilon_r$ of the medium and $d$ is the thickness of the electric double layer, which is about 0.3 nm almost independently of the materials involved. Dielectric constant (permittivity) is dictated by the solvent that is water or some other polar solvent in electrolyte capacitors. In the table 1 are some solvents and their dielectric constants.

Table 1. Permittivities of some solvents that can be used in supercapacitors of the present invention.

| Liquid | Permittivity |
| --- | --- |
| Methanol | 33 |
| Acetonitrile | 36 |
| Glycerol | 47 |
| Water | 80 |
| Ethylene carbonate | 90 |
| Formamide | 111 |
| N-methylacetamide | 179 |
| N-methylformamide | 189 |

Electrolytes dissolve also better into the solvents that have high permittivity. Solvents should be electrochemically as inert as possible. Water is perhaps most reactive solvent that is listed in Table 1.

It is clear from Eq. 1 that the surface area of the electrodes should be maximized. The large surface area has been obtained by using nano or microsized carbon and/or metal particles. It has been realized that HNTs are ideal candidates for supercapacitors. The problem with HNTs is bundling of individual HNTs. If the HNTs are touching each other, the free surface area is reduced. In capacitors the concentration of the HNTs should be over 10 % of the volume, and preferably 25 % or more. There has been no dispersion methods that are able to separate essentially all of the HNTs from the bundles, if the concentration is over 10 %. In addition, many dispersion agents for the HNTs, such as detergents, are used is excess so that their concentration is several fold as compared to the HNTs alone. Some other dispersion agents, including many polymers, do not form a porous structure.

The present invention utilizes a strong interaction of cellulose and cellulose derivatives with HNTs, which allows the fabrication of HNT-cellulose composites that have more than 50 % of the HNTs. Moreover, the HNT-cellulose is electrically conducting, porous and hydrophilic, allowing ion transport inside the whole structure.

Let us consider array of parallel HNTs that have outer radius of $R$, and inner radius of $r$ are separated by a distance $s$, and obvious limitation is $2R < s$. In one cubic meter the outer surface area of these HNTs (area/m$^3$) will be

$$A = \frac{4\pi}{\sqrt{3}} \frac{P}{\delta} \quad, \tag{2}$$

and the total surface area including the inner surface of the HNTs is

$$A = \frac{4\pi}{\sqrt{3}\delta^2} (P+\rho) \quad. \tag{3}$$

Eq. 2 will be used for single walled HNTs, while Eq. 3 is applicable for multiwalled HNTs.
The volume occupied by the HNTs (volume/$m^3$) is

$$V = \frac{2\pi}{\sqrt{3}} \frac{P^2}{\delta^2} \quad, \tag{4}$$

while the actual volume of the carbonaceous part of the tube is

$$V_C = \frac{2\pi}{\sqrt{3}\delta^2} (P^2 - \rho^2) = \frac{2\pi}{\sqrt{3}\delta^2} (P+\rho)(P-\rho) \tag{5}$$

Area per mass is important for the calculation of the specific capacitance. For multiwalled HNTs we get

$$\frac{A}{M} = \frac{A}{\rho \varsigma_X} = \frac{2}{\rho(P-\rho)} \tag{6}$$

$$\frac{A}{M} \cong \frac{10^4}{3.5 v} \tag{7}$$

where n is the number of layers in the HNT.
When the area per mass unit is substituted into the Eq. 1

$$C_{CNT} = 2.8 * 10^3 * \frac{\varepsilon}{v\delta} \quad. \tag{8}$$

This is capacitance for one gram. The HNT-cellulose capacitor has a density that is very close to 1 g/cm$^3$. If water is the solvent, and the thickness of the electric double layer is about 0.3 nm, the specific capacitance per one gram of HNTs is about

$$C_{CNT} = \frac{7 * 10^3}{v} \quad. \tag{7}$$

The specific capacitance measures the effectiveness of the active electrode material. The mass of the electrolyte is not included, and only the mass of the HNTs in one electrode is taken into account.
It is also important to know the capacitance per unit volume.

$$C = 64.3 * 10^6 * \frac{\varepsilon}{\delta} \frac{P}{\delta^2}$$

The capacitance for one milliliter is

$$C = 17 * 10^3 * \frac{p}{\sigma}.$$

The volume fraction of HNTs can hardly be higher than 0.75 in the composite, although this is not an absolute or fundamental limit. Otherwise there is not enough space for the electrolyte and support material, and HNTs touch and block too much each other. This gives for the ratio *R/s* the approximate value of 0.45, and the capacitance per one milliliter is

$$C = 7.7 * 10^3 * \frac{1}{\sigma}. \tag{8}$$

Single walled HNTs can have radius of about 0.5 nm, and then *s* should be 2 nm. The capacitance would be about 2,000 F/g. For multi walled HNTs the similar calculation gives the capacitance of 200 F/g. The latter value has been obtained with some published methods. These values were calculated for water based supercapacitors. If the permittivity is higher, for example 160, these values would double.
The energy that is stored in a capacitor is

$$E = \frac{X\varsigma^2}{2}. \tag{9}$$

For industrial capacitors the energy is expressed in units of Whr/kg. If the capacitance is 2000 F/g, the highest possible energy density would be 275 Whr/g that is extremely high value. If organic polar solvents are used this value could be obtained with supercapacitor that is made from multiwalled HNTs. These energy densities are higher than those in batteries, and any commercially available capacitor.
The potential limit in water is 1.2 V, although some electrode materials allow overpotential up to 1.8 V. In organic solvents the limit is about 3 V. That limit is set mainly by electrolytes that start to react, if the potential is higher. Because the potential in organic solvents can be about three times higher, the energy that is stored is about nine timer bigger.
The maximum potential of a single supercapacitor element will be estimated next. If there is on the average one elementary charge in the area of *a,* the total number of elementary charges is (see Eq. 5)

$$N_e = 7.26 * 10^{27} * \frac{\rho}{\alpha\sigma^2}. \tag{10}$$

When the charge is expressed in Coulombs, the result is

$$Q = N_e \ \varepsilon = 1.16 * 10^9 * \frac{\rho}{\alpha\sigma^2}. \tag{11}$$

When we substitute r/s = 1/4, we get

$$Q \cong 3 * 10^8 * \frac{1}{\alpha c}. \tag{12}$$

The highest possible total charge is obtained, if *a* and *s* are as small as possible. It seems that *r* should be as large as possible, but the diameter 2*r* can not be bigger than the separation *s*. Because *s* is in second power, it dominates. Because there must be space between the HNTs for the ions, *s* must be at least one nanometer bigger than 2*r*. If single walled HNTs are used, *r* can be 0.5 nm. Then *s* should be two nanometers. The smallest area per charge cannot be much less than 0.1 square nanometers.
These values give for the maximum charge for one cubic meter volume

$$Q \cong 1.5 * 10^9 X. \tag{13}$$

Now the voltage of the capacitor, when it is fully charged can be calculated from Eq. 1, and the result is 0.75 V. This is quite reasonable value.

If one element in the capacitor is 0.25 mm thick, and the area of the capacitor is 10 m , the charge maximum is about $2*10^7$ C.

The power of the capacitor is

$$P = YI \tag{14}$$

A typical car uses 70 kW of power (100 hp). If the voltage is 70 V, the current must be 1000 A, i.e., thousand Coulombs per second. The capacitor can operate $2*10^4$ s that is about 5 h 30 min. If one element has potential of 2 V, 35 elements are needed. Thickness of the capacitor would be 17.5 mm plus casing. The weight of the capacitor would be about 200 kg. It is more advantageous to increase the voltage to 280 V, and decrease the current to about 250 A. This can be accomplished by dividing the large capacitor into four parts and connecting them in series.

The volume of the HNTs in one cubic meter will be

$$V = \frac{\pi}{2\sqrt{3}} \frac{\delta^2}{\acute{\sigma}} \tag{15}$$

$$V = 0.907 * \frac{\delta^2}{\acute{\sigma}} \tag{16}$$

In the example, in which $d$ = 1 and $s$ = 2, volume of the HNTs would be 0.227 m$^3$. There must be about the same amount of support material. Thus, the volume of solid material will be about 0.45 m$^3$.

The number of ions in one cubic meter would be 3.63 * 10$^{27}$, which corresponds to about 6000 moles. Taking into account the available volume 0.55 m$^3$ in the specific example, the concentration of ions would be 11 M. In this calculational example, positive ions are in one cubic meter and negative ions in another cubic meter. Thus the total volume of the salt will be 1.1 m$^3$. The concentration of the salt will be 5.5 M. For example, if the molecular weight of the salt is 100 g/mol, the solution contains 550 g of salt in one liter. This allows about 700 ml of solvent for a typical salt. Only a few salts have this kind of solubility. Thus, molecular weight of 100 g/mol can be considered the upper limit. More advantageously, the molecular weight is less than 50 g/mol. This limit must be calculated per charge, for example, the molecular weight of calcium chloride must be divided by two. Then one liter contains 275 g of salt, and about 850 ml of solvent. There are only handful of salts and solvents that fulfill these limitations. Salts include lithium fluoride, lithium chloride, lithium thiocyanate, lithium hydroxide, sodium tetrafluoroborate, sodium hydroxide, potassium carbonate, ammonium fluoride, and methyl ammonium fluoride. Acids, such as hydrofluoric acid, hydrochloric acid, sulfuric acid, and formic acid are also possible, if the matrix material can tolerate acids.

Solvents include water, methanol, ethylene glycol, methyl formamide, dimethyl formamide, methyl acetamide, dimethyl acetamide, hexamethyl phophoramide. Also mixtures of these and other solvents may be used.

As a conclusion, a supercapacitor is feasible for the storage of electricity for demanding applications. The problem is, how to come even close to the values that were used for these calculations.

Cellulose-HNT nanocomposite will solve many problems that have prevented the fabrication of large scale supercapacitor so far.

All the salts listed in Table 2 fulfill the solubility requirement, except potassium chloride

| Compound | MW | Solubility g/100 g of water | Equivalents per 100 g of water | Mass % | Freezing point depression °C | Viscosity mPa s |
|---|---|---|---|---|---|---|
| NH$_4$F | 37.0 | 83.5 | 2.26 | 45.5 | | |
| CaCl$_2$ | 111.0 | 81.3 | 1.46 | 44.8 | 49.7 (34 %) | 2.23 |
| LiOAc | 66.0 | 45.0 | 0.68 | 31.0 | | |
| LiBr | 86.8 | 181 | 2.09 | 64.4 | | |
| LiClO$_3$ | 90.4 | 459 | 5.08 | 82.1 | | |
| LiCl | 42.4 | 84.5 | 2.02 | 45.8 | 21.0 (14 %) | 1.65 |

(continued)

| Compound | MW | Solubility g/100 g of water | Equivalents per 100 g of water | Mass % | Freezing point depression °C | Viscosity mPa s |
|---|---|---|---|---|---|---|
| NaCl | 58.4 | 36.0 | 0.62 | 26.5 | 19.2 (22%) | 1.68 |
| $HCO_2Na$ | 68.0 | 94.9 | 1.40 | 48.7 | | |
| NaOH | 40.0 | 100 | 2.50 | 50.0 | 16.8 (14 %) | 2.57 |
| KCl | 74.6 | 35.5 | 0.48 | 26.2 | 5.9 (12 %) | 0.99 |
| KF | 58.1 | 102 | 1.76 | 50.5 | | |
| $K_2CO_3$ | 138.2 | 111 | 1.61 | 52.6 | 37.6 (40 %) | 4.36 |
| $K_3PO_4$ | 212.3 | 106 | 1.50 | 51.5 | | |
| KOH | 56.1 | 121 | 2.16 | 54.8 | 4.9 ( 7 %) | 1.15 |
| $H_2SO_4$ | | No limit | | | 55.3 (34 %) | 2.23 |

that is a limiting case. Many salts are even better soluble in solvents that have higher permittivity than water (see Table 1). Tetramethyl ammonium tetrafluoroborate is currently preferred with many organic solvents.

The capacitance increases linearly with the permittivity. Because the salt concentration can also increase, the volume of the liquid can stay the same or even decrease. The total charge of the capacitor can be double or even triple to the values that were calculated using water as the solvent.

Ionic liquids offer several advantages, most notably no solvent is required. Ionic liquids have good affinity for the HNTs, and they will fill the inside of the HNTs and small cavities between the HNTs. Most ionic liquids are imidazolinium derivatives. Currently preferred are butyl methyl imidazolium salts, such as tetrafluoroborate.

Some factors will reduce the efficacy of the supercapacitor. The HNTs may be bundles and the available surface are is seriously reduced. This can be avoided by efficient coating material. However, as the calculation shows the mass of the coating material can not exceed the mass of the HNTs, at least by much. The coating material must be such that it allows the movement of the ions, and interacts with polar solvents. The structure should be porous at nanoscale, so that ions can get in every place. Only a few support material fulfill all these requirements. The present invention utilizes the unique properties of cellulose, and the surprisingly strong interaction of HNTs and cellulose. Some polymers, such as polyvinyl alcohol, polyacryl amide, and polyacrylated in general can be used in varying proportions, including the range 0 - 50 % of the HNT content, most advantageously 10 - 20 %.

Cross-linking

It is preferable that the HNT-cellulose matrix is cross-linked so that it is physically stable in an electrolyte solution. In addition to improved physical properties, the matrix can be chemically modified so that it has ion exchange capacity.

Cross-linking reagents include alkali borate 503 (Fig. 5 A), cyanuric chloride 504 (Fig. 5 B), epichlorohydrin, dicarboxylic acids with carbodiimides, dicarboxylic acid chlorides, and active esters of di-, and polycarboxylic acids. Borate is one currently preferred reagent. It will spontaneously esterified with four hydroxyl groups in alkaline solution. Boric atom will be negatively charged. Correspondingly, cyanuric chloride may be used to cross-link cellulose molecules 506 and 507. Cyanuric chloride may bind with three hydroxyl groups. Two may bind with different cellulose chains, and one with an alcohol or amine, such as, choline 508 or trimethylamine. In this case quaternary ammonium groups will be immobilized.

Combination of battery and supercapacitor

Batteries can still have higher energy density than supercapacitors and also constant potential, although in every other aspect supercapacitors can be better. Proper combination of a battery and supercapacitor can provide the benefits of both systems.

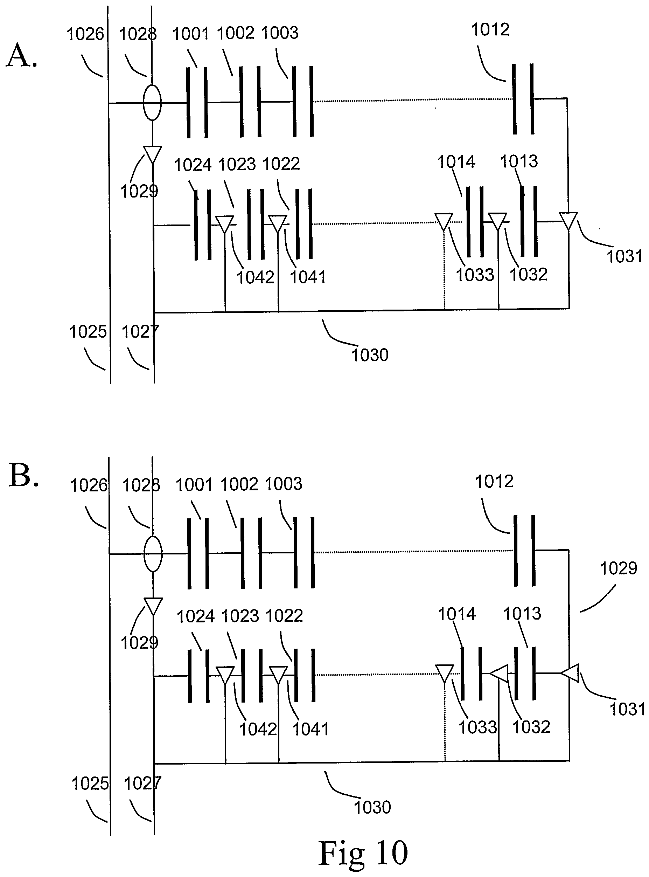

A combination of car battery and supercapacitor is used as a non-limiting example, because this is a very demanding application. A battery is alternatingly charged and discharged, and peak power demand can be very high leading to shorter life time of the battery. These most demanding tasks can be taken care by an array of supercapacitors that is coupled with a battery as is depicted in Fig. 10.

The wire 1025 - 1026 is grounded. The end 1025 is connected to an alternator and the end 1026 with the battery. Similarly, the wire 1027 is connected to the alternator and 1028 with the battery. When the SC array is fully charged, it has a potential that is the same the potential of the battery, which typically is 12 V. If the capacitor contains water, the highest safe potential is about 1.2 V, and ten capacitors are needed in series to get total voltage of 12 V. In the Fig. 5, twelve capacitors 1001 - 1012 are used (Fig. 10 A).

The potential of a capacitor drops, when it is discharged. In order to keep the potential close to 12 V, an additional array of capacitors 1013 - 1024 is used. When the potential of the array 1001 - 1012 drops below the preset value, for example, 11.5 V, a capacitor 1013 is coupled in series with capacitors 1001 - 1012. If all capacitors had originally potential of 1 V, now the extended array has a potential of 12.5 V. Because capacitors 1001 - 1012 have already discharged $1/24^{th}$ of their charge, the capacitor 1013 can have smaller capacitance than capacitors 1001 - 1012. The exact proportion of the capacitances is 23/24 in this example. If the potential drops again below 11.5 V, the capacitor 1014 is coupled using the switch 1032 (Fig. 10 B). The charge in capacitors 1001 - 1013 has now dropped a fraction 2/23, and fraction 21/23 of the previous is left, which is 21/24 (=7/8) of the original. This is sufficient size of the capacitor 1014 in relation to the capacitors 1010 - 1012. Similar reasoning leads to a conclusion that the capacitor 1024 can be about one third (exact value is 0.35) of the size of the capacitors 1001 - 1012. This means that about 44 % of the total charge, and 81 % of energy, of the capacitors 1001 - 1023 has already been used, when the capacitor 1024 is coupled on. There is no mandatory reason that the number of capacitors in the base array 1001 - 1012 and the stabilizing array 1013 - 1024 is the same. If the number of stabilizing capacitors is 24, it is possible to use 96 % of the stored energy, while maintaining the potential nearly constant (12 $\pm$ 0.5 V). The whole process can be microprocessor controlled.

Switches can be solenoid switches.

While the engine is started both the battery and SC array are needed to guarantee maximum energy and power density, during driving only SC array is necessary. Also when driving begins, both the battery and SC are connected with the alternator. When the battery is fully charged, it will be disconnected. SC is always connected with the alternator, and will take care of any power surges that exceed the capacity of the alternator. Only, if the potential drops below 11.5 V, the battery is coupled on.

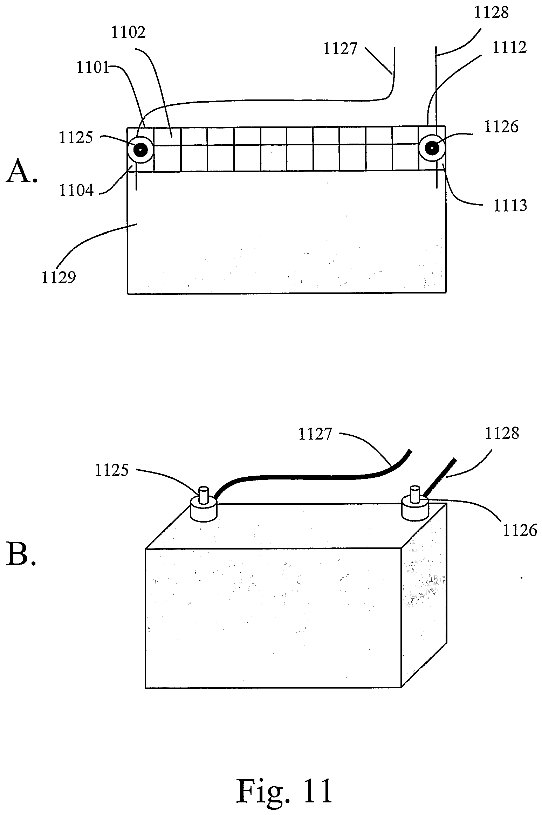

Fig. 11 is a schematic drawing of a hybrid supercapacitor-lead battery. In a currently preferred embodiment the size and electrical connections 1125 and 1126 are similar to the presently used lead battery, because then the present hybrid can substitute without any modifications the lead battery in cars.

Electrostatic Ion Exchange and Desalination

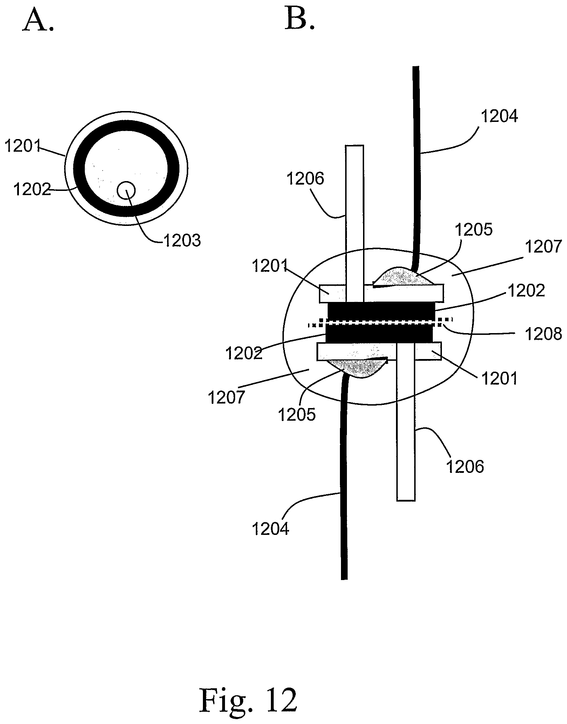

An electrolyte capacitor that has flow through arrangement for a liquid can be used for desalination and electrostatic ion exchange (Fig. 12, Example 12). For example, if the supercapacitor of this invention does not contain any ions at the beginning, no current will flow, when the potential is applied. When electrolyte solution flows through the supercapacitor, the ions will be trapped into an electric double layer (Fig. 9) near the surface of the HNTs. The concentration of the ions in this double layer can be tens of times higher than in the bulk solution. The solvent that comes out is virtually free of the electrolyte until the capacitor is saturated.

The capacitor can be regenerated, i.e., the electrolyte removed by discharging the capacitor. Most of the electricity can be recovered by charging another capacitor as will be explained later. During the discharge the capacitor is eluted with pure solvent or with dilute electrolyte solution.

This method is ideally suited for desalination of seawater. As a non-limiting example we may inspect a capacitor that has the capacitance of 50,000 C/1 kg. The removal of one mole of salt requires one Farad, i.e., about 100,000 C. Thus, 2 kg capacitor is able to remove one mole of salt without regeneration. The removal of one mole of salt requires 25 Wh of energy. The external potential is decoupled, and the capacitor is discharged, while it is washed with seawater. After the wash is complete, the cycle can be started from the beginning. The salt content of water can be continuously monitored by measuring the conductance.

Most of the electricity can be recycled. One currently preferred embodiment includes an array of supercapacitors, which are fully charged at the beginning. This array is in series, when the potential is applied to the ion exchange capacitor. When the ion exchanger is discharged this array is connected in parallel.

Because the electrostatic deionization column is an electrolyte capacitor, the electricity is stored in it. During the wash step, the electricity can be recovered by another supercapacitor. Actually, an array of supercapacitors gives the best possible recycling of the energy. First, a small capacitor is charged. Then increasingly bigger capacitors will be charged, until most of the charge has been recovered. The potential of each recycling capacitor is given by the following equation

$$V_{k,1+} = \frac{\varsigma_0}{(1+\chi_1)(1+\chi_2) \quad (1+\chi_k)} \cdot \qquad (17)$$

and the corresponding charge

$$Q_{k,1+} = \frac{X_k \varsigma_0}{(1+\chi_1)(1+\chi_2) \quad (1+\chi_k)} \cdot, \qquad k = 1, 2, ..., n \qquad (18)$$

where actual capacitance of the capacitor $k$ is denoted by capital $C_k$, an the relative capacitance $c_k = C_k/C_l$, where $C_l$ is the capacitance of the deionization capacitor (column). Plus sign after number one denotes charging of the capacitor, and one denoted first charging cycle.

The residual charge of the deionization capacitor is discharged by short circuiting, because it is advantageous to remove all salt as completely as possible. During desalination the capacitor that has the lowest potential ($k = n$), is connected first to the deionization capacitor, and one at time other capacitors. The last one will be the smallest one ($k = 1$) that has the highest potential. With this method it is possible to recover about half of the electric charge. The remainder must be taken from electric grid or from other external source. During the second discharge of the deionization capacitor, there will be residual charge left in the supercapacitor array, and potential will be slightly higher than during the first discharge. Accordingly, more electricity can be loaded into deionization capacitor during the second cycle than during the first cycle. It is possible to use recycling capacitors also in series. This provides some advantage. The whole process can be controlled by a microprocessor and switches, such as solenoid switches.

Ground water contains often too many various ions, such as iron, calcium, arsenate, and even uranium. These can be removed by the methods and devices of this invention. Actually, because most of these ions have multiple charge, they are easier to bind electrostatically than sodium or chloride. Currently unwanted ions are often replaced by sodium and chloride by conventional ion exchange, i.e., one type of salt is replaced with another. The present invention allows total removal of all salts. The process can be totally automated and no chemicals are needed in the process.

Electrostatic Filtering of Micro and Nanoparticles

The porous nature combined with electrical conductivity of HNT-cellulose makes these material ideal for electrostatic filtering of particles. This is analogous to ion exchange, but in this case the particle does not necessarily have permanent charge. It may be polarized by HNT, it may be ionized, or it may have local positive or negative charge.

Although all other applications have involved liquid medium, the filtering of particles can also work in gaseous milieu. There is an increasing need to remove particles from air, for example, exhaust from power plants should be purified. Air can be too contaminated for many people, and purifying the indoor air might be necessary. These and other air and gas purification systems are made possible by the present invention. The large surface area, and porous structure connected with good electrical conductivity provide excellent air and gas purification capacity.

Microelectronics will benefit from these new materials. Especially they are useful for printable electronics, because of the good conductivity will allow thin and narrow wires. One problem is the length of cellulose fibres and HNTs. The optimal length depends on the desired resolution. The components must be cut shorter either chemically or physically. There is an optimum length; too short HNTs require many contacts, and too long HNTs do not allow good enough resolution. HNTs can be fabricated short, or they may be cut, for example, by oxidation with a mixture of sulfuric and nitric acids. Mechanical milling will cut HNTs shorter as well as ultrasonic vibration. Both methods are well known in-the-art.

Antistatic applications are a further example of electric applications of these new materials. One example is the coating of gas station yards. Also many industrial facilities require antistatic surfaces. These include many chemical and semiconductor production facilities.

EXPERIMENTAL DETAILS

While this invention has been described in detail with reference to certain examples and illustrations of the invention, it should be appreciated that the present invention is not limited to the precise examples. Rather, in view of the present disclosure, many modifications and variations would present themselves to those skilled in the art without departing from the scope of claims. The examples provided are set forth to aid in an understanding of the invention but are not intended to, and should not be construed to limit in any way the present invention.

In Examples 1-5 HNTs are carboxyl-CNTs, in Examples 6 and 7 HNTs are amino-CNTs, and in Examples 8-13 HNTs are hydroxyl CNTs (see J. Virtanen et al. PCT/FI2005/000437)

Example 1.

One gram of cellulose was suspended into 20 ml of water that contained 50 mg of sodium dodecylbenzene sulfonate. HNTs (20 mg) were added and the mixture was sonicated 60 minutes with tip sonicator, power 400 W. The mixture filtered and washed with hot water. The cellulose-HNT nanocomposite was spread evenly on a filter paper (20 cm x 20 cm). After drying the resistance, measured from a distance of 10 cm, was 4. 8 M$\Omega$.

Example 2.

One gram of cellulose was suspended into 50 ml of water. The mixture was filtered and washed three times with 20 ml of isopropanol. Cellulose was suspended into 40 ml of isopropanol, and 20 mg of HNTs were added. The mixture was sonicated 60 minutes with tip sonicator, power 400 W. The mixture was spread evenly on a filter paper (20 cm $\times$ 20 cm). After drying the resistance, measured from a distance of 10 cm, was 40 k$\Omega$.

Example 3.

Nanocomposite was prepared as in Example 2, but 300 mg of HNTs were used. The resistance of dry paper was about 150 $\Omega$.

Example 4.

One gram of microcrystalline cellulose and 300 mg multiwalled HNTs were wetted with 2 ml of water in a mortar. The mixture was ground ten minutes manually, and sonicated 15 minutes using 400 W power. After air drying a tabled was pressed under ten ton pressure during five minutes. The weight of the tablet was 204 mg. The resistance between two probes was measured at three different distances:

| | |
|---|---|
| 1 mm | 7.90 $\Omega$ |
| 5 mm | 7.95 $\Omega$ |
| 9 mm | 8.02 $\Omega$ |

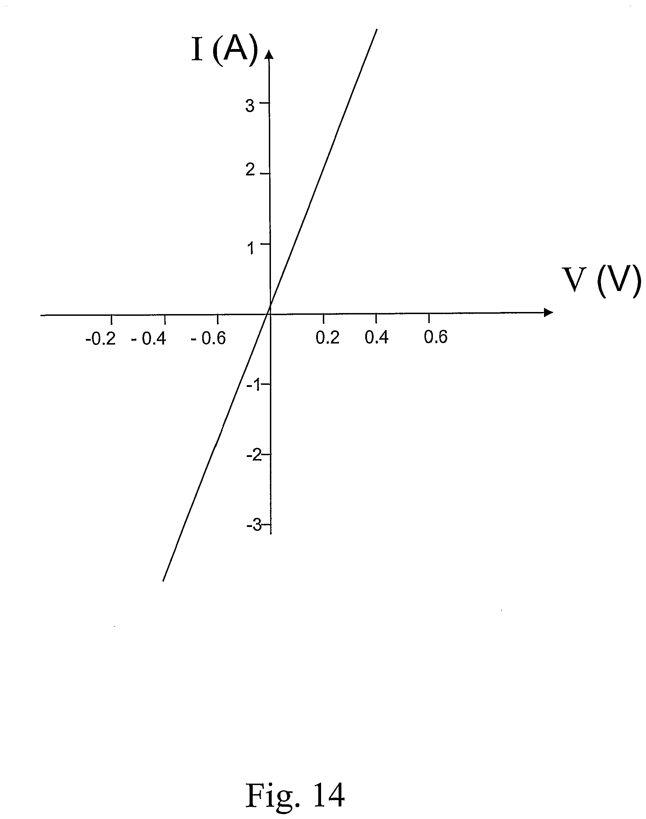

The resistance is mainly due to the contact resistance. Clearly, most of the resistance is due to a surface resistance. In order to eliminate the contact resistance, four point measurement was performed. The resistance turned out to be 0.08 $\Omega$, and resistivity 0.11 $\Omega$cm. I-V measurement showed that the material was ohmic, i.e., I-V curve was linear (Fig. 14).

Example 5.

The tablet of the Example 4 was heated on a hot plate to the temperature of about 150 °C. A solution of 11 mg of chromium hexacarbonyl in 1 ml of toluene was added dropwise. The tablet was heated by applying across the diagonal of the tablet a potential of 6 V. In about 15 s the temperature was 200 °C, when measured with a thermocouple. The heating was discontinued. The resistance was now 4.3 $\Omega$, which represents a reduction of 3.7 $\Omega$ of the untreated tablet.

Example 6.

Triacetyl cellulose (228 mg) and HNTs (64 mg) were ground in a mortar with 2 ml of acetone. The paste was transferred into a test tube, 10 ml of acetone was added. The mixture was sonicated 15 min using 400 W power. The solution was spread onto a glass plate (10 cm $\times$ 10 cm), dried. The resistance was 28.4 $\Omega$, when the probes were separated 1 mm, and 48.1 $\Omega$ with at 9 mm distance.

Example 7.

Into 940 mg of bisphenol A diglycidyl ether (BADG) was added 66 mg of the cellulose-HNT nanocomposite of Example 3, and 2 ml of 2-propanol. The mixture was sonicated 60 min with 400 W power. The resistance of 1 mm thick dried layer was 16.2 k$\Omega$, when the probes were separated 10 mm. When the probes were allowed to stand in mixed position, the resistance dropped to 6.3 k$\Omega$. As a reference, when pure HNTs were mixed similarly with BADG without cellulose, the resistance was 4. 6 M$\Omega$. When 45 mg of cellulose was added as such, and mixed with ultrasonic vibration, the resistance dropped to 24 k$\Omega$. Cellulose in BADG does not give any conductance.

Example 8

50 g of wood chips and 12 g of HNTs were heated under pressure at 120 oC one hour in 200 ml cooking liquid that contained 18 g of sodium hydroxide, 8 g of sodium sulfide, and 6 g of sodium carbonate. The mixture was cooled down to 80 oC, and sonicated with 400 W power 15 minutes. Heating and sonication cycles were repeated until the wood chips were almost dissolved. The mixture was filtered and washed with water and water-isopropanol mixture. The product was dried, weight was 32 g. The pulp was further ground and coarse material separated by sieve. The product was suspended into water and spread onto a microfilter. After drying one piece of the paper (1 g) was wetted with 5 % KOH and 0.8 ml of 10 % cyanuric chloride in tetrahydrofurane was added.

Another piece of the same paper (1 g) was treated with 1 ml of 10% biphenyl diisocyanate.

Example 9

The acetone suspension of Example 6 was pipetted into a water surface in Langmuir through (KSV 3000). The film behaved like a monolayer, and the end pressure was about 40 mN/m.

When the subphase contained 10 mM NaOH and 1 mM boric acid, acetate groups were hydrolyzed before compression and boric acid was bound by the hydroxyl groups of cellulose. The film could be compressed to about 20 mN/m, and was deposited both horizontally and vertically on a glass slide.

Example 10

Into 15 ml of 3 M KOH was added 1.0 g microcellulose. The mixture was kept in ultrasonic bath for 10 minutes, and 5 ml of carbondisulfide was added. Sonication was continued 20 minutes, and 250 mg of HNTs were added, and sonicated another 20 minutes. The mixture was injected into 10 % sulfuric acid through a nozzle. The fober was electrically conducting.

Cellulose was also dissolved into Sweizer's reagent, tetra-amminecopper(II) hydroxide, or into urea solution. Fibres could be prepared also from these solutions.

Example 11

The flow cell depicted in Fig. 13 was constructed by gluing O-ring 1302 (diameter 13 mm) onto circular graphite plate 1301. A hole 1303 was drilled into the graphite plate, and covered with porous nylon membrane. The space defined by O-ring was filled with cellulose-HNT pellet. Porous nylon membrane 1308 was glued on top of the O-ring 1302 by superglue. An electric wire 1304 was soldered onto the graphite plate using tin 1305. Teflon tube 1306 was put tightly into the hole 1303. The other half was fabricated similarly, and the two identical parts were combined with parafilm, and encapsulated into epoxy resin 1307.

The cell was filled with vacuum suction with several electrolyte solutions, including LiCl, $CaCl_2$, and tetramethyl ammonium tetrafluoroborate. Solvents included water, acetonitrile, and propylenecarbonate. Concentrated ammonia was added into some solutions in order to lower the freezing point. Electrolyte type or concentration had only small effect on the capacitance. The typical specific capacitance was 120 F/1 g of HNT. Addition of nanoparticles, such as highly oxidized HNTs, increased this value about 65%. Using highly polar cellulose derivative, such as carboxymethyl cellulose that was coupled with dimethyl amine using carbodiimide, increased the capacitance 20 %.

Example 12

1 ml of 100 mM NaCl solution was allowed to flow through the cell of Example 11, while applying 1 V potential into cell. The sodium concentration of the eluent was measured by atomic absorbtion spectrometry. 87 % of the sodium chloride was removed.

Example 13

One gram of cellulose was dissolved into 50 ml of concentrated calcium isothiocyanate at 140 °C in an autoclave. Into a hot solution was added 250 mg HNTs, and the mixture was sonicated 20 min. Water was replaced by ethanol by dialysis. Supercritical carbon dioxide drying yielded electrically conducting aerogel.

Addition of tetraethoxysilane and/or tetraethoxytitanate into the ethanol solution before dialysis gave mechanically more stable product.

**Claims**

1. A nanocomposite that contains cellulose and carbon nanotubes, **characterized in that** said carbon nanotubes are functionalized carbon nanotubes, wherein functionalized carbon nanotubes are chemically cross-linked with each other and cellulose.

2. A nanocomposite according to Claim 1, in which the functionalized carbon nanotubes contain carboxyl, sulfonyl, nitro, amino, hydrazine, and/or hydroxyl functionalities.

3. Nanocomposite according to claim 1 having a reagent cross-linking cellulose and functionalized carbon nanotubes.

4. Nanocomposite according to claim 3, wherein the said cross-linking reagent contains epoxy, isocyanate, or active ester functionalities.

5. Nanocomposite according to Claim 3, in which the cross-linking material is a metal atom or metal cluster.


**Patentansprüche**

1. Cellulose-Kohlenstoffnanoröhren-Nanoverbundwerkstoffe, **dadurch gekennzeichnet, dass** genannte Kohlenstoffnanoröhren funktionalisierte Kohlenstoffnanoröhren sind, wobei die funktionalisierten Kohlenstoffnanoröhren miteinander und mit Cellulose chemisch vernetzt sind.

2. Nanoverbundwerkstoff nach Anspruch 1, in dem die funktionalisierten Kohlenstoffnanoröhren Carboxyl-, Sulfonyl, Nitro-, Amino-, Hydrazin- und/oder Hydroxylfunktionalitäten enthalten.

3. Nanoverbundwerkstoff nach Anspruch 1, enthält ein Reagenz, das Cellulose und funktionalisierte Kohlenstoffnanoröhren vernetzt.

4. Nanoverbundwerkstoff nach Anspruch 3, wobei genanntes Vernetzungsreagenz Epoxy-, Isocyanat- oder aktive Esterfunktionalitäten enthält.

5. Nanoverbundwerkstoff nach Anspruch 3, in dem das Vernetzungsmaterial ein Metallatom oder Metall-Cluster ist.


**Revendications**

1. Nanocomposite comprenant des nanotubes de cellulosecarbone, **caractérisé en ce que** lesdits nanotubes de carbone sont des nanotubes de carbone fonctionnalisés, dans lequel les nanotubes de carbone fonctionnalisés sont chimiquement réticulés les uns avec les autres et avec la cellulose.

2. Nanocomposite conformément à la revendication 1, dans lequel les nanotubes de carbone fonctionnalisés sont porteurs de fonctions carboxyliques, sulfonyliques, nitro, aminés, hydraziniques et/ou hydroxyliques.

3. Nanocomposite conformément à la revendication 1 comportant un réactif réticulant la cellulose et des nanotubes de carbones fonctionnalisés.

4. Nanocomposite conformément à la revendication 3, dans lequel ledit réactif de réticulation est porteur de fonctions époxydes, isocyanates ou ester actif.

5. Nanocomposite conformément à la revendication 3, dans lequel le matériau de réticulation est un atome de métal ou un agrégat de métaux.

Fig. 1

A.

B.

Fig. 2

Fig. 3

A.                                       B.

Fig. 4

Fig. 5

Fig. 6

Fig. 7

Fig. 8

Fig. 9

Fig 10

A.

B.

Fig. 11

A.

B.

Fig. 12

Fig. 13

Fig. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020159943 A1, R.E. Smalley
- WO 2004007364 A, J.M. Tour
- WO 2006040398 A, J.Virtanen
- FI 2005000437 W

**Non-patent literature cited in the description**

- **S. H. YOON et al.** Electrically conductive bacterial Cellulose by incorporation of carbon nanotubes. *Biomacromolecules,* 2006, vol. 7, 1280-1284
- **M. ANKERFORS et al.** A manufacturing method for microfibrillated cellulose. *6th International Paper and Coating Chemistry Symposium,* 2006
- **HIELSCHER T.** Ultrasonic production of nano-size dispersions and emulsions. *ENS'05,* 14 December 2005
- **SHIGENORI KUGA.** The porous structure of cellulose gel regenerated from calcium thiocyanate solution. *Journal of Colloid and Interface Science,* October 1980, vol. 77 (2), 413-417
- **H. JIN.** *Nanofibrillar cellulose aerogels, Colloids and Surfaces A: Physicochemical and Engineering Aspects,* 15 June 2004, vol. 240 (1-3), 63-67
- **VICTOR L. PUSHPARAJ.** Flexible energy storage devices based on nanocomposite paper. *PNAS,* 21 August 2007, vol. 104 (34), 13577